# EUROPEAN PATENT APPLICATION

(11) **EP 3 508 616 A1**
(43) Date of publication of application: **10.07.2019**
(21) Application number: 19150579.1
(22) Date of filing: 07.01.2019
(51) Int. Cl.: C23C 24/10, C23C 28/00, F01D 5/28

(54) **METHOD FOR APPLYING AN ABRASIVE TIP TO A HIGH PRESSURE TURBINE BLADE**

(30) Priority: 05.01.2018 US 201815863172
(71) Applicant: United Technologies Corporation, Farmington, CT 06032 (US)
(72) Inventor: THAYER, Henry H., Westhersfield, CT 06109 (US); RUNKLE, Rebecca L., Manchester, CT 06040 (US); NOVIKOV, Dmitri, Avon, CT 06001 (US)
(74) Representative: Dehns

(57) **Abstract**

A process for coating a gas turbine blade (10) with an abrasive coating (16). The process includes positioning the gas turbine blade (10) in a nest (38), the gas turbine blade (10) comprising a tip (14) having a top surface (40); prepositioning a metal powder material (34) on the top surface (40); fusing the metal powder material (34) to the top surface (40) by use of a laser (32) to form a base layer (24) on the top surface (40); prepositioning an abrasive composite material (44) on the base layer (24) opposite the top surface (40); fusing the abrasive composite material (44) to the base layer (24) by use of the laser (32) to form an abrasive coating (16) on the base layer (24); and removing the gas turbine blade (10) from the nest (38).

## Description

### BACKGROUND

The present disclosure is directed to abrasive coating of an abradable sealing system, such as blade tips within turbine engine applications. More particularly, the present disclosure is directed to a method of applying an abrasive coating to a gas turbine high pressure turbine blade by use of abrasive powder placement and laser fusion to provide a corrosion resistant abrasive tip for high pressure turbine (HPT) blades that has virtually no waste stream, and is lower cost and is faster than electro plating.

Gas turbine engines and other turbomachines have rows of rotating blades and static vanes or knife-edge seals within a generally cylindrical case. To maximize engine efficiency, the leakage of the gas or other working fluid around the blade tips should be minimized. This may be achieved by designing sealing systems in which the tips rub against an abradable seal. Generally, the tip is made to be harder and more abrasive than the seal; thus, the tips will abrade or cut into the abradable seal during those portions of the engine operating cycle when they come into contact with each other.

During the operation of a gas turbine engine, it is desired to maintain minimum clearance between the tips and corresponding abradable seals as large gap results in decreased efficiency of the turbine, due to the escape of high-energy gases. However, a small gap may increase the frequency of interaction between the tips and seal. That in turn, due to the friction between the tips and seals, will lead to excessive component wear and efficiency reduction or even component distress. Since aircraft turbines experience cyclic mechanical and thermal load variations during operation their geometry varies during the different stages of the operating cycle. Active clearance control and abrasive tips are currently used to establish and maintain optimum clearance during operation. Ideally, those tips should retain their cutting capability over many operating cycles compensating for any progressive changes in turbine geometry.

During certain engine operating conditions engines have shown very high radial interaction rates (∼40"/s (101.6 cm/s)) between abrader tips and abradable seals that cause rapid depletion of the abrasive grit portions of the abrasive tip coating when rubbed against the abradable seals. Low incursion rates (typically smaller than 1.5 mil/s (0.038 mm/s) for porous metallic abradables) can also result in excessive wear and damage to abradable sealing systems through the generation of large thermal excursion within the seal system (abrasive tip and abradable seal). Methods to increase the amount of cut of the abradable seal by blade can greatly reduce the damage from these conditions.

The abrasive tips are generally applied using electro plating. The electro plating process is slow, costly, takes up a large amount of space, and creates a large waste stream. What is needed is a method of applying the abrasive coating that is faster, less expensive, takes less space, and generates virtually no waste.

### SUMMARY

In accordance with the present disclosure, there is provided a process for coating a gas turbine blade with an abrasive. The process includes positioning the gas turbine blade in a nest, the gas turbine blade comprising a tip having a top surface; positioning a metal powder material on the top surface; fusing the metal powder material to the top surface by use of a laser to form a base layer on the top surface; positioning an abrasive composite material on the base layer opposite the top surface; fusing the abrasive composite material to the base layer by use of the laser to form an abrasive coating on the base layer; and removing the gas turbine blade from the nest.

In an embodiment, the abrasive composite material or abrasive coating comprises a corrosion resistant metal powder material and an abrasive material.

In a further embodiment of any of the previous embodiments, the abrasive coating comprises a metal matrix surrounding the abrasive material.

In a further embodiment of any of the previous embodiments, the process further comprises using a binding agent to fix the metal powder material in place prior to the fusing.

In a further embodiment of any of the previous embodiments, the process further comprises using a force of gravity to fix the metal powder material in place prior to the fusing.

In a further embodiment of any of the previous embodiments, fusing of the metal powder material to the top surface comprises passing a laser beam over the metal powder material and fusing the metal powder material and bonding the metal powder material to the top surface.

In a further embodiment of any of the previous embodiments, fusing the abrasive composite material to the base layer comprises passing a laser beam over the abrasive composite material fusing a metal powder material into a matrix surrounding an abrasive material.

In a further embodiment of any of the previous embodiments, the process further comprises positioning an additional predetermined quantity of the metal powder material on the abrasive coating; and fusing the additional predetermined quantity of metal powder material to the abrasive coating by use of the laser to form an encapsulation layer on the abrasive coating.

Other details of the method of applying an abrasive blade tip coating are set forth in the following detailed description and the accompanying drawing wherein like reference numerals depict like elements.

### BRIEF DESCRIPTION OF THE DRAWINGS

FIG. 1 is a schematic representation of abrasive composite coating applied to a tip of a turbine engine component.
FIG. 2 is a schematic cross-sectional view of the exemplary abrasive blade tip coating.
Fig. 3 is a schematic representation of a direct laser chamber.
FIGs. 4a to 4f show a schematic representation of an exemplary abrasive composite coating application process.

### DETAILED DESCRIPTION

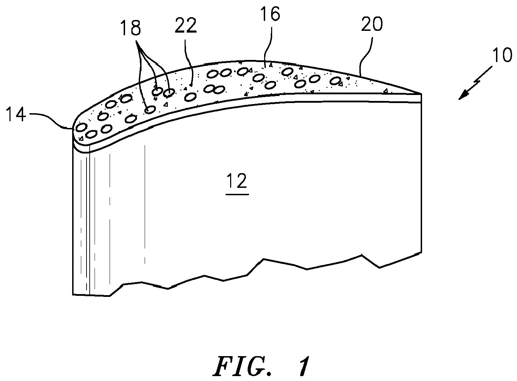

Referring now to FIG. 1 there is illustrated a turbine engine component 10, such as a gas turbine blade including but not limiting to high pressure and or hot section turbine blade. The turbine blade 10 has an airfoil portion 12 with a tip 14. The tip 14 has an abrasive coating 16 applied to it. The abrasive coating 16 comprises a corrosion resistant composite material (such as NiCoCrAlY) that includes an abrasive particulate/grit or simply first grit 18, such as cubic boron nitride (CBN), coated silicon carbide (SiC), or another hard ceramic phase. The grit 18 can be sized as a coarse grit. In an exemplary embodiment the grit 18 can be sized from about 40 to about 1000 microns. The first grit 18 is embedded in a layer matrix composite or simply matrix layer 20. The matrix layer 20 comprises a suitable oxidation-resistant alloy matrix. In an exemplary embedment the matrix layer 20 comprises a matrix formed from Ni, Co, or MCrAlY, the M standing for either Ni or Co or both. In an exemplary embodiment, the matrix layer 20 can comprise pure nickel, nickel alloy, copper, copper alloy, cobalt, cobalt alloy, chrome or other alloys. A second grit 22 can be interspersed between the first grit 18. The second grit 22 is a smaller sized particle than the larger first grit material 18. In an exemplary embodiment, the second grit 22 is sized to about 1/10 the size of the first grit 18. The second grit 22 can be from about 5% to about 20% of the nominal diameter of the first grit 18. The second grit 22 may be Al₂O₃ (alumina), Si₃N₄ (silicon nitride), CBN (cubic boron nitride), or other similar abrasive particles. The percentage of first grit particles within the mixture should range from 2% to 25%. Second grit particles range from about 75% to about 98% of the total number of particles.

Second grit 22 is placed within the matrix layer 20 in one or more layers, to produce a total height from the base tip material that is 10-60% of the height of the first grit 18. Second grit particles 22 are 40%-90% recessed below the height of the first grit particle 18 total height above the tip 14. The resulting blade tip 14 with abrasive coating 16 is particularly well suited for rubbing metal as well as ceramic abradable seals (not shown).

The turbine engine component/blade 10 may be formed from a nickel-based, cobalt-based, or other alloy. In an exemplary embodiment, the blade 10 includes a (Ni) nickel-based alloy.

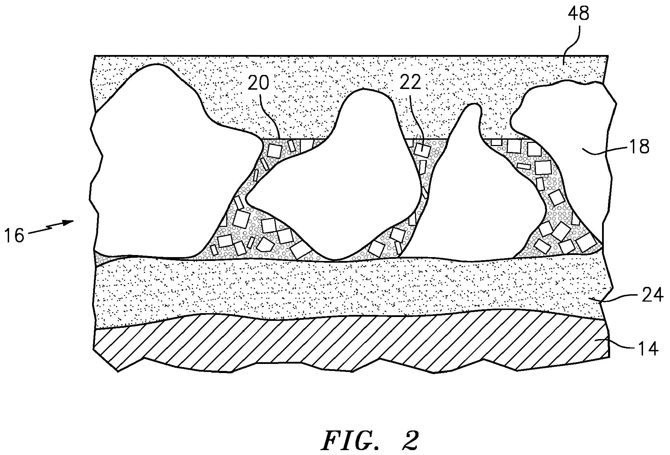

Referring to FIG. 2 an exemplary abrasive coating 16 is shown. The abrasive coating 16 includes the large first grit 18 and relatively smaller second grit 22 interspersed throughout the matrix layer 20, but typically in the range of 10 to 1 diameter ratio.

In an exemplary embodiment, the first grit particles 18 range in size from about 0.04 to about 1.00 millimeters (mm) nominally. First grit 18 particle sizes can range up to about 1.00 mm nominally.

This abrasion protection thus, enables greater first grit 18 retention by maintaining support from the composite material of the matrix layer 20.

The abrasive coating 16 can include a base layer 24 bonded to the blade tip 14. The base layer 24 can be the same material as the matrix layer 20. The base layer 24 can be from about 1 to about 100 microns in thickness. In an exemplary embodiment, the base layer 24 can be from about 25 to about 50 microns in thickness. The base layer 24 can be optionally applied.

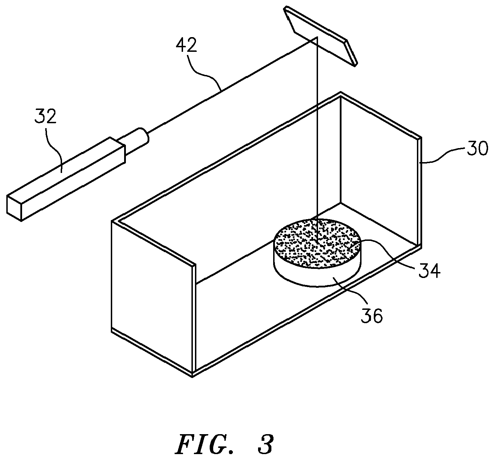

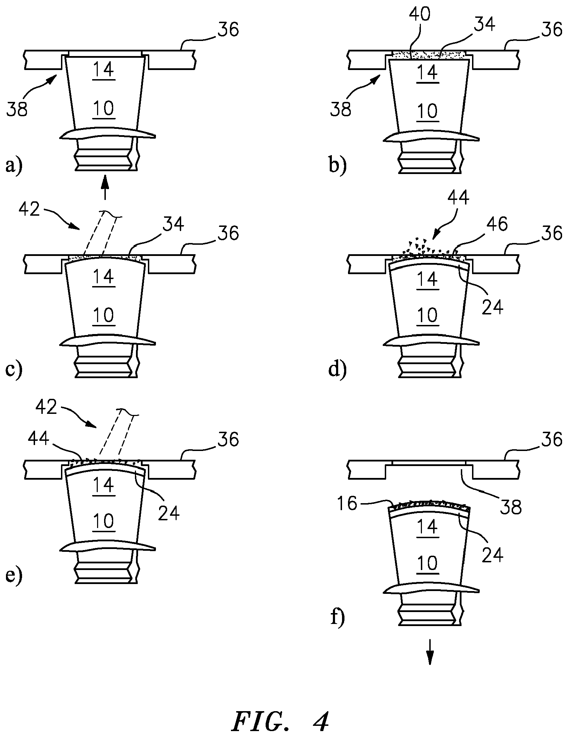

Referring to FIG. 3, a direct laser chamber 30 for performing the direct laser processing of a powder bed of material in order to produce an abrasive coating 16 is shown. The chamber 30 includes a laser 32 configured to melt the material that is then allowed to solidify to form the coating 16. The laser 32 provides a beam 42 that selectively melts and allows the re-solidification of the material within the chamber 30. The laser 32 can be selected to be compatible with the materials 34 that are being processed. Other devices for melting the material are contemplated and can include but are not limited to ultrasound, x-ray, and microwave. Positioned within the chamber 30 is a powder bed of material 34 for melting with the laser beam. A material holder 36 is illustrated as a tray, however other types of material holders are contemplated. In an exemplary embodiment the material holder 36 accepts the turbine blade 10 into a nest 38 (shown in Fig. 4) so that the abrasive coating 16 can be directly melted, solidified and bonded on the blade 10. The process can produce a directly tipped blade 10.

Referring to Fig. 4, the exemplary process for coating a high pressure turbine blade with an abrasive is illustrated. The above described abrasive coating 16 can be applied by utilizing the chamber 30 or other similar devices.

As shown at Fig. 4a, the blade 10 is positioned in the nest 38 of the material holder 36. The tip 14 of the blade 10 is exposed to allow the metal powder material 34 to be applied. In an exemplary embodiment, the metal powder material 34 can comprise a corrosion resistant metal powder material.

Fig. 4b shows the metal powder material 34 is prepositioned on a top surface 40 the tip 14. The metal powder material 34 can be formed to be the base layer 24.

Fig. 4c shows the laser beam 42 fusing the metal powder material 34 to the top surface 40 to form the base layer 24 on the top surface 40. The fusion of the metal powder material 34 to the top surface 40 comprises passing the laser beam 42 over the metal powder material 34 and fusing the metal powder material 34 and bonding the metal powder material 34 to the top surface 40.

Fig.4d shows an abrasive composite material 44 being prepositioned on top of the base layer 24. The abrasive composite material 44 is not blown into place simultaneously/coaxially with the laser 42 in this disclosure. The abrasive composite material 44 is prepositioned on the base layer 24 in the absence of a laser. The abrasive composite material 44 can be used to form the abrasive coating 16 including the matrix layer 20 and including the first grit 18 formed on the base layer 24 opposite 40 top surface of the tip 14. In an exemplary embodiment, the abrasive composite material 44 can include the matrix layer 20 material, the first grit 18 and second grit 22 materials in compositions as described above. In an exemplary embodiment, a binding agent 46 can be utilized to fix the metal powder material 34 and/or the abrasive composite material 44 in place prior to fusing. The binding agent 46 can include a commercially available liquid binder used in powdered metal brazing, such as Nicobraze. In an exemplary embodiment the binding agent 46 can include a mixture of ethanol and corn gluten, or other organic binder that can evaporate under the heat of the laser 42. In an exemplary embodiment, the force of gravity can be utilized to fix the metal powder material 34 and/or the abrasive composite material 44 in place prior to fusing.

Fig. 4e shows the laser beam 42 fusing the abrasive composite material 44 to the base layer 24 to form the abrasive coating 16 on the base layer 24. The fusion of the abrasive composite material 44 to the base layer 24 comprises passing the laser beam 42 over the abrasive composite material 44 fusing matrix layer 20 material into a matrix surrounding the abrasive material, that is, the first grit 18 and/or second grit 22.

In an exemplary embodiment, an optional encapsulation layer 48 (see Fig. 2) of metal powder material 34 can be applied over the abrasive coating 16 with the matrix layer 20, first grit 18 and second grit 22. The steps at figure 4b and 4c could be repeated after the process shown at Fig. 4e, to form the encapsulation layer 48. An additional quantity of the metal powder material 34 can be prepositioned on top of the abrasive coating 16. The laser beam 42 can fuse the additional quantity of metal powder material 34 to the abrasive coating 16 to form the encapsulation layer 48 on the abrasive coating 16.

Fig. 4f shows the high pressure turbine (HPT) blade 10 being removed from the nest 38. These steps can be repeated for a variety of gas turbine engine components in addition to blades.

The disclosed process can provide a corrosion resistant abrasive tip for HPT blades that has virtually no waste stream, and is lower cost and is faster than electro plating.

The process can provide a more consistent thickness than electro plating as well as a more reliable bond to the blade tip. The process can also take less space than an electro plating line.

There have been provided processes of applying an abrasive blade tip coating. While the processes of applying an abrasive blade tip coating have been described in the context of specific embodiments thereof, other unforeseen alternatives, modifications, and variations may become apparent to those skilled in the art having read the foregoing description. Accordingly, it is intended to embrace those alternatives, modifications, and variations that fall within the broad scope of the appended claims.

## Claims

1. A process for coating a gas turbine blade (10) with an abrasive coating (16), said process comprising:
positioning said gas turbine blade (10) in a nest (38), said gas turbine blade (10) comprising a tip (14) having a top surface (40);
prepositioning a metal powder material (34) on said top surface (40);
fusing said metal powder material (34) to said top surface (40) by use of a laser (32) to form a base layer (24) on said top surface (40);
prepositioning an abrasive composite material (44) on said base layer (24) opposite said top surface (40);
fusing said abrasive composite material (44) to said base layer (24) by use of said laser (32) to form an abrasive coating (16) on said base layer (24); and
removing said gas turbine blade (10) from said nest (38) .

2. The process of claim 1, wherein said abrasive composite material (44) comprises a corrosion resistant metal powder material and an abrasive material (18, 20).

3. The process of claim 1 or 2, wherein said abrasive coating (16) comprises a metal matrix (20) surrounding said abrasive material (18, 20).

4. The process of claim 1, 2 or 3, further comprising using a binding agent (46) to fix said metal powder material (34) in place prior to said fusing.

5. The process of claim 1, 2 or 3, further comprising using gravity to fix said metal powder material (34) in place prior to said fusing.

6. The process of any preceding claim, wherein said fusing of said metal powder material (34) to said top surface (40) comprises passing a laser beam (42) over said metal powder material (34) and fusing said metal powder material (34) and bonding said metal powder material (34) to said top surface (40).

7. The process of any preceding claim, wherein said fusing said abrasive composite material (44) to said base layer (24) comprises passing a or the laser beam (42) over said abrasive composite material (44) fusing a metal powder material into a matrix surrounding an abrasive material.

8. The process of any preceding claim, further comprising:
prepositioning an additional predetermined quantity of said metal powder material (34) on said abrasive coating (16); and
fusing said additional predetermined quantity of metal powder material (34) to said abrasive coating (16) by use of said laser (32) to form an encapsulation layer (48) on said abrasive coating (16).
